# EUROPEAN PATENT SPECIFICATION

(11) **EP 3 676 433 B1**
(45) Date of publication and mention of the grant of the patent: **05.11.2025**
(21) Application number: 18758886.8
(22) Date of filing: 29.08.2018
(51) Int. Cl.: D04H 1/4209, C09D 183/04, D04H 1/4218, D04H 1/64, D04H 3/002, D04H 3/004, F16L 59/14

(54) **USE OF A MINERAL WOOL PRODUCT**
VERWENDUNG VON MINERALWOLLPRODUKT
UTILISATION D'UN PRODUIT EN LAINE MINÉRALE

(30) Priority: 30.08.2017 EP 17188632
(43) Date of publication of application: 08.07.2020
(60) Divisional application: 25203418.6
(73) Proprietor: ROCKWOOL A/S, 2640 Hedehusene (DK)
(72) Inventor: ZWAAG, Claudia, 2640 Hedehusene (DK)
(74) Representative: Meissner Bolte Partnerschaft mbB
(86) International application number: PCT/EP2018/073268
(87) International publication number: WO 2019/043075

(56) References cited:
- WO-A2-2008/127936
- CN-A- 104 402 211
- US-A1- 2012 070 645

## Description

### Field of the Invention

The present invention relates to the use of a mineral wool product comprising mineral fibers bound by a binder resulting from the curing of a binder composition comprising a hydrophobic agent to inhibit corrosion when insulating metallic structures.

### Background of the Invention

Corrosion is the deterioration of a metal as result of a chemical reaction between it and the surrounding environment. Corrosion involves the conversion of the metal to a more chemically stable form, such as oxide, hydroxide or sulfide.

Corrosion of steel occurs in the presence of water and oxygen. Corrosion of steel parts is a major economic problem which often times makes up a major part of the maintenance and renewal costs of steel structures.

A very specific problem is the problem of corrosion under insulation (CUI) which affects steel parts which are thermally isolated by an insulating material. Steel structures are often insulated in order to avoid heat loss. Such a thermal insulation might be desirable for steel structures which are much warmer or colder than their surrounding environment. CUI occurs in particular under insulation for steel structures which undergo cyclic temperature changes like e.g. pipelines in the oil and gas industry.

Since corrosion of steel occurs in the presence of water and oxygen, the presence of water in contact with the steel structure is a major factor contributing to corrosion. Since thermal insulation materials surrounding the steel structures in order to avoid heat loss tend to keep water in contact with the steel structure for a longer time than the contact would last without the surrounding insulating material, such insulating materials can contribute to increased corrosion. Steels are in general susceptible to CUI in the temperature range of 0 °C to 175 °C. The most frequently occurring types of CUI are general and pitting corrosion of carbon steel which may occur if wet insulation comes in contact with carbon steel, and external stress corrosion tracking (ESCT) of austenitic stainless steel, which is a specific type of corrosion mainly caused by the action of water-soluble chloride from rain water or if the insulation is not meeting the appropriate requirements. Since the corroded surface is mostly hidden by the insulation system and will not be observed until the insulation is removed for inspection or in the event of metal failure leading to incidents, it is very important to control CUIs as much as possible.

In order to avoid CUI, the insulated steel structures are often covered by an additional cladding which is to prevent the entering of water. However, experience shows that water often enters via fault or damages in the cladding system or via humid air in structures which undergo cyclic temperature changes. Water may also come into contact with the steel structure internally from non-tight fittings or externally from events like flooding.

In order to avoid CUI, steel structures like pipelines in the oil and gas industries are often protected against corrosion by coating the steel parts with a protective layer, e.g. with other metals like zinc or aluminum. However, such coating layers are never a completely protecting layer and these protective measures can be extremely cost-intensive and might be economically unacceptable for extensive pipeline systems.

There have been previous attempts to use mineral wool products as insulation of metallic structures and still protect them from CUI. The most common way to reduce CUI is by use of a mineral wool product prepared from a mineral wool binder to which a mineral oil has been added. By adding mineral oil, the water repellent requirements according to EN13472 can be met. However, for these mineral wool products, the inhibition of CUI is still not satisfactory, because the water absorption is still too high. In addition, these mineral wool products used as insulation materials suffer from the disadvantage that when exposed to higher temperatures, the water absorbance quickly raises to unacceptable levels. This is in particular a problem for the use of such insulation materials for insulating pipelines in the oil and gas industry since in these pipelines operating temperatures often exceed 150°C. Under these conditions, the water repellent properties of these insulation materials are quickly lost.

The problems associated with CUI can be so serious, that some companies choose to avoid thermal insulation of pipelines even though this leads to a highly energy-inefficient operation.

US 2012/070645 A1 describes a sizing composition for insulating products based on mineral wool including at least one saccharide, at least one organic polycarboxylic acid having a molar mass of less than or equal to 1000, and at least one silicone. The sizing composition is used to form insulation products based on glass wool.

WO 2008/127936 A2 is directed to composite Maillard-resole binders to produce or promote cohesion in non-assembled or loosely assembled matter such as mineral fibers. In the examples a duct media is tested for corrosivity on steel.

### Summary of the Invention

Accordingly, it was an object of the present invention to provide an insulation of a metallic structure that allows effective thermal insulation of such a structure and at the same time minimizes maintenance costs and optimizes durability of the structure.

In particular, it was an object of the present invention to provide an insulation of a metallic structure that allows effective thermal insulation of such a structure and at the same time minimizes corrosion of the metallic structure

It was a further object of the present invention to provide a binder composition for mineral fibers which allows the production of a mineral wool product for such purposes.

It was a further object of the present invention to provide a mineral wool product prepared with such a binder composition.

It was a further object of the present invention to provide a method of making such a mineral wool product.

In accordance with a first aspect of the present invention, there is provided the use of a mineral wool product comprising mineral fibers bound by a binder resulting from the curing of a binder composition comprising a hydrophobic agent comprising at least one silicone compound, which is a reactive silicone resin chosen from the group of polyalkylethoxysiloxane, polymethylethoxysiloxane, polyphenylethoxysiloxane, polyphenylsiloxane, polyphenylmethylsiloxane to inhibit corrosion when insulating metallic structures, wherein the mineral wool product is used as insulation of a metallic structure, said structure having an operating temperature between 70-650 °C.

In accordance with a second aspect of the present invention, there is provided a method for producing a mineral wool product which comprises the steps of contacting mineral fibers with a binder composition comprising a phenol-formaldehyde-based resin, and/or a carbohydrate-containing component, and a hydrophobic agent comprising (i) at least one silicone compound, which is a reactive silicone resin chosen from the group of polyalkylethoxysiloxane, polymethylethoxysiloxane, polyphenylethoxysiloxane, polyphenylsiloxane, polyphenylmethylsiloxane, (ii) at least one hardener, which is alkyltriethoxysilane, such as octyltriethoxysilane, (iii) at least one emulsifier, wherein the mineral wool product is in form of an insulation product for thermal insulation of metallic structures.

The present inventors have surprisingly found that a very specific hydrophobic agent can impart properties to a mineral wool binder which allow the use of a mineral wool product prepared from mineral fibers bound by such a binder as an insulation of a metallic structure and at the same time avoid problems with corrosion under insulation, associated with previously known insulation products.

### Description of the Preferred Embodiments

The present invention is directed to a use of a mineral wool product comprising mineral fibers bound by a binder resulting from the curing of a binder composition comprising a hydrophobic agent comprising at least one silicone compound, which is a reactive silicone resin chosen from the group of polyalkylethox-ysiloxane, polymethylethoxysiloxane, polyphenylethoxy-siloxane, polyphenyl-siloxane, polyphenylmethylsiloxane to inhibit corrosion when insulating metallic structures wherein the mineral wool product is used as insulation of a metallic structure, said structure having an operating temperature between 70-650 °C.

### Hydrophobic Agent

The present inventors have surprisingly found that by the use of the very specific hydrophobic agent described herein, corrosion problems in form of corrosion under insulation can be avoided. Without wanting to be bound to any specific theory, the present inventors assume that the corrosion problems associated with the previously-known use of insulation elements for metal structures are connected to the so-called wicking-effect of such insulation products. This wicking effect of the insulation products causes moisture, once it has entered the system, to be retained for a prolonged period of time at the surface of the metal structure. Accordingly, such insulation materials prolong the time during which the surface of the metal structure is kept in contact with water which contributes to an increased rate of corrosion in particular at higher temperatures.

Without wanting to be bound to any specific theory the present inventors assume that the use of the very specific hydrophobic agent described herein allows a quicker dry out time which allows an inhibition of corrosion.

It has now surprisingly been found that by use of mineral wool products prepared from a binder containing the hydrophobic agent described herein, excellent insulation characteristics can be attained while at the same time the corrosion under insolation is effectively inhibited.

In one embodiment, the binder composition comprises a phenol-formaldehyde based resin, and/or a carbohydrate containing component.

In one embodiment, the hydrophobic agent comprises at least one hardener, such as silane, such as octyltriethoxysilane.

In one embodiment, the hydrophobic agent comprises at least one emulsifier.

The mineral wool product is used as insulation of a metallic structure, said structure having an operating temperature between 70-650 °C, such as between 70-300 °C, such as between 300- 650 °C.

In one embodiment, the present invention is directed to the use of a mineral wool product comprising mineral fibers bound by a binder resulting from the curing of a binder composition comprising a hydrophobic agent comprising at least one silicone compound, which is a reactive silicone resin chosen from the group of polyalkylethoxysiloxane, polymethylethoxysiloxane, polyphenylethoxysiloxane, polyphenylsiloxane, polyphenylmethylsiloxane; at least one hardener, such as silane, such as octyltriethoxysilane; at least one emulsifier; and wherein the use is as insulation of a metallic structure, said structure having an operating temperature between 70-650 °C, such as between 70-300 °C, such as between 300-650 °C.

In one embodiment, the hydrophobic agent comprises (i) in an amount of 20 to 90 percent by weight, in particular 30 to 60 percent by weight, based on the weight of the hydrophobic agent.

In one embodiment, the hydrophobic agent comprises (i) in form of polymethylethoxysiloxane.

In one embodiment, the hydrophobic agent comprises (ii) in an amount of 0.5 to 10 percent by weight, in particular 1 to 5 percent by weight, based on the total weight of the hydrophobic agent.

In one embodiment, the hydrophobic agent comprises (ii) in form of octyltriethoxysilane.

In an alternative embodiment, the silicone compound component (i) also serves as the hardener component (ii) of the hydrophobic agent. Accordingly, in this alternative embodiment, the hydrophobic agent comprises at least one silicone compound, which is a reactive silicone resin chosen from the group of polyalkylethoxysiloxane, polymethylethoxysiloxane, polyphenylethoxysiloxane, polyphenylsiloxane, polyphenylmethylsiloxane, and at least one emulsifier.

Accordingly, in one embodiment, the hardener is another compound than the silicone compound. In an alternative embodiment, the hardener is comprised in the silicone compound as a curable system. In this alternative embodiment, the hardener may be the feature that is effected by an intra-molecular hardening of the silicone compound.

In one embodiment, the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

In one embodiment, the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

In one embodiment, the binder composition mineral wool product comprises the hydrophobic agent in an amount of 0.05 to 2 percent by weight, such as 0.10 to 1 percent by weight, such as 0.15 to 0.8 percent by weight, based on the weight of the aqueous binder composition mineral wool product.

In one embodiment, the binder composition comprises a carbohydrate-containing binder component, wherein the binder component further comprises (a) a polycarboxylic acid component or any salt thereof and/or an inorganic acid or any salt thereof, and/or (b) a component selected from the group consisting of amine compounds, ammonia; and optionally, and/or (c) a reaction product of a polycarboxylic acid component or anhydride thereof and an alkanolamine component.

In one embodiment, the mineral wool product is a pipe section or a mat or wired mat.

### Binder Composition

An embodiment not according to the claimed invention is a binder composition for mineral fibers comprising: a phenol-formaldehyde-based resin, and/or a carbohydrate-containing component; and a hydrophobic agent comprising: (i) at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, (ii) at least one hardener, such as silane, such as alkyltriethoxysilane, such as octyltriethoxysilane, (iii) at least one emulsifier.

This binder composition, which comprises a specific hydrophobic agent, allows the production of mineral wool products which can be used as insulation of a metallic structure having very good insulation characteristics and at the same time allows the inhibition of corrosion under insulation.

In one embodiment, the hydrophobic agent comprises (i) in an amount of 20 to 90 percent by weight, in particular 30 to 60 percent by weight, based on the weight of the hydrophobic agent.

In one embodiment, the hydrophobic agent comprises (i) in form of polymethylethoxysiloxane.

In one embodiment, the hydrophobic agent comprises (ii) in an amount of 0.5 to 10 percent by weight, in particular 1 to 5 percent by weight, based on the total weight of the hydrophobic agent.

In one embodiment, the hydrophobic agent comprises (ii) in form of octyltriethoxysilane.

In an alternative embodiment, the silicone compound component (i) also serves as the hardener component (ii) of the hydrophobic agent. Accordingly, in this alternative embodiment, the hydrophobic agent comprises at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, and at least one emulsifier.

Accordingly, in one embodiment, the hardener is another compound than the silicone compound. In an alternative embodiment, the hardener is comprised in the silicone compound as a curable system. In this alternative embodiment, the hardener may be the feature that is effected by an intra-molecular hardening of the silicone compound.

In one embodiment, the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

In one embodiment, the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

### Mineral Wool Product

The mineral fibres employed for the production of the mineral wool products may be any of man-made vitreous fibres (MMVF), glass fibres, ceramic fibres, basalt fibres, slag fibres, stone fibres and others. These fibres may be present as a wool product, e.g. like a stone wool product.

An embodiment not according to the claimed invention is a mineral wool product comprising mineral fibers bound by a binder resulting from the curing of a binder composition comprising a phenol-formaldehyde-based resin, and/or a carbohydrate-containing component, a hydrophobic agent comprising: (i) at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, (ii) at least one hardener, such as silane, such as alkyltriethoxysilane, such as octyltriethoxysilane, (iii) at least one emulsifier.

In one embodiment, the hydrophobic agent comprises (i) in an amount of 20 to 90 percent by weight, in particular 30 to 60 percent by weight, based on the weight of the hydrophobic agent.

In one embodiment, the hydrophobic agent comprises (i) in form of polymethylethoxysiloxane.

In one embodiment, the hydrophobic agent comprises (ii) in an amount of 0.5 to 10 percent by weight, in particular 1 to 5 percent by weight, based on the total weight of the hydrophobic agent.

In one embodiment, the hydrophobic agent comprises (ii) in form of octyltriethoxysilane.

In an alternative embodiment, the silicone compound component (i) also serves as the hardener component (ii) of the hydrophobic agent. Accordingly, in this alternative embodiment, the hydrophobic agent comprises at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, and at least one emulsifier.

Accordingly, in one embodiment, the hardener is another compound than the silicone compound. In an alternative embodiment, the hardener is comprised in the silicone compound as a curable system. In this alternative embodiment, the hardener may be the feature that is effected by an intra-molecular hardening of the silicone compound.

In one embodiment, the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

In one embodiment, the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

In one embodiment, the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

In one embodiment, the binder composition comprises a carbohydrate-containing binder component, wherein the binder composition further comprises (a) a polycarboxylic acid component or any salt thereof and/or an inorganic acid or any salt thereof, and/or (b) a component selected from the group consisting of amine compounds, ammonia; and optionally, and/or (c) a reaction product of a polycarboxylic acid component or anhydride thereof and an alkanolamine component.

In one embodiment the mineral wool product is in form of an insulation product for thermal insulation of metallic surfaces structures.

In one embodiment the mineral wool product is in form of a pipe section or a mat or wired mat.

Pipe sections are pre-formed (formed in the factory) insulation materials used for the insulation around pipes.

A typical embodiment of such a pipe section is a mandrel wound pipe section.

A mandrel wound pipe section is a pre-formed, full-round cylindrical pipe insulation product which is produced by wrapping an uncured mineral wool blanket around a mandrel in spiral manner for forming and subsequent curing. The cylindrical pipe sections are split and hinged for easy snap-on assembly. Mandrel wound pipe sections can be both faced and un-faced with aluminum foil.

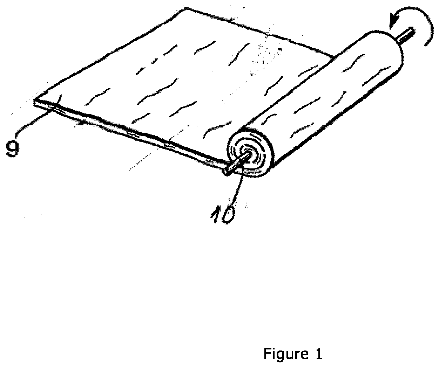

Figure 1 shows how such a mandrel wound pipe section is typically produced. In this method the pipe section is wound from a thin web 9 of mineral wool, preferably stone wool. The web 9 is wound around a perforated mandrel 10 as it is known when producing wound pipe sections. After winding hot air is conventionally blown from inside the mandrel and through the wound pipe section for curing of the thermoset binder.

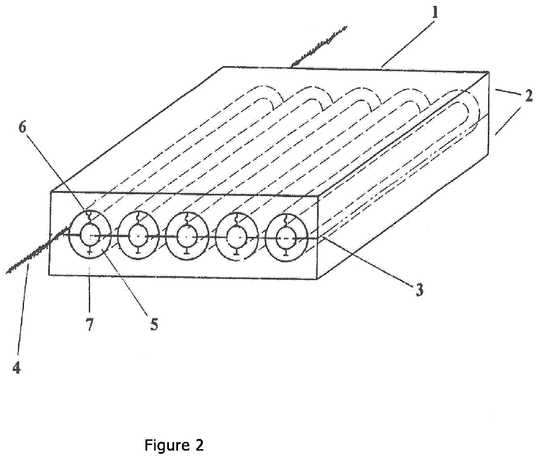

An alternative embodiment of a pre-formed pipe section is shown in figure 2.

Figures 2 illustrates a block (1) bonded mineral wool and a cutting string (4) by means of which pipe sections (5) having a tongue/groove-joint (6) and a T-shaped hinge slit (7) are cut out of the block in the transverse direction of the block and parallel to the main surface planes of the block. After cutting out each pipe section 5 is removed from the block.

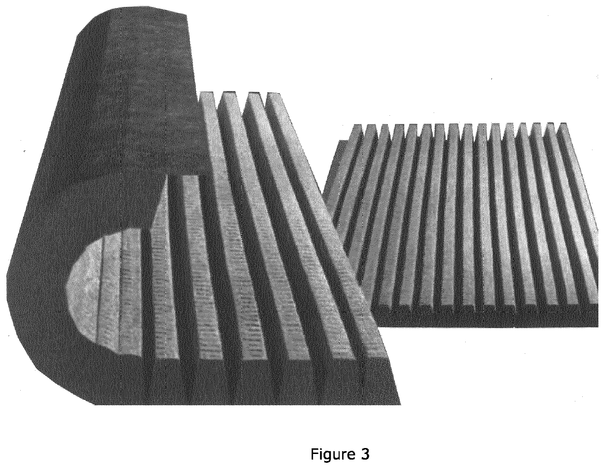

A further embodiment of a pipe insulation is shown in figure 3 which shows a mat of mineral wool provided with transversally extending V-grooves. Due to the V-grooves the mat can be wrapped around a pipe on site as indicated in the version shown at the front in figure 3.

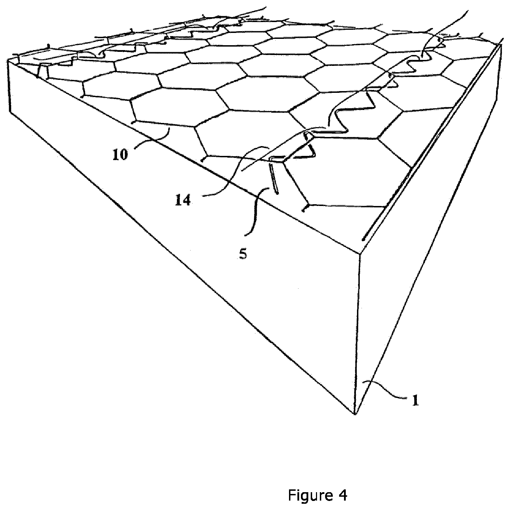

An alternative embodiment is a mineral wool product in form of a wired mat. Figure 4 is an ilustration of such a wired mat.

Figure 4 illustrates in perspective view such a wired mat according to the invention where an insulation layer 1 in terms of a mineral fibre web is provided with a chicken wire 10 which is fastened to the insulating layer 1 by means of an iron thread 14 stitched through the insulating layer. A fixation means 5 in terms of a galvanised iron wire may be in zigzag configuration and placed under the chicken wire 10. In an alternative embodiment, no such fixation means are included.

In a further alternative embodiment, mats are used without any wiring. In this alternative embodiment, the mineral wool product is in form of a mineral wool mat - sometimes also called a slab.

Figure 5 shows how a wired mat according to figure 4 is mounted on a pipe as insulation material.

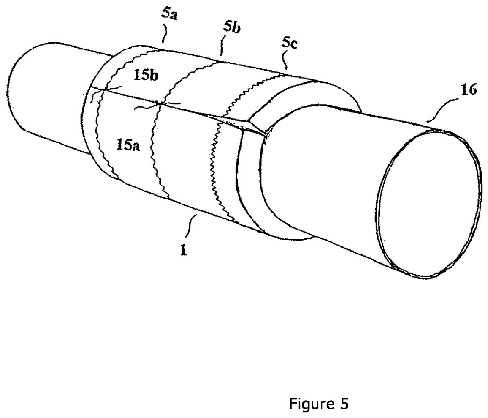

Figure 5 illustrates an embodiment of the insulating product mounted on a pipe 16, where the product comprising insulating layer 1 is adapted to fit the circumference of pipe 16 and fixation means 5a and 5b extending around the mounted product secures the product on the pipe 16 by knots 15a and 15b. The fixation means 5c has not yet been extended to protrude beyond the adjoining end surfaces of the product to enable the fixation thereby.

In one embodiment the mineral wool product has a water absorption according to ASTM C1763-16 of less than 4.0 vol.%, such as less than 2.0 vol.%, such as less than 1.5 vol.%.

In one embodiment the mineral wool product has a water absorption according to EN13472 of less than 1.0 kg/m2, such as less than 0.8 kg/m2, such as less than 0.5 kg/m2, such as less than 0.3 kg/m2.

In one embodiment the mineral wool product has water absorption according to EN13472 of less than 1.0 kg/m2, such as less than 0.8 kg/m2, such as less than 0.5 kg/m2, such as less than 0.3 kg/m2, following storage of the mineral wool product at 250°C for 24 hours.

In this embodiment, in which the water absorption according to EN13472 is measured following storage of the mineral wool product at 250°C for 24 hours, the following protocol for exposing the product to 250°C for 24 hours is followed:
- Pre-heat a laboratory furnace to 250 °C which is placed under a fume hood.
- Place the samples in the furnace for a period of 24 hours.
- The ventilation of the furnace shall be off, except from the last 30 minutes of the heating when the ventilation shall be on in order to remove fumes from the furnace in a safe way.
- Remove the samples from the furnace and let them cool down to ambient temperature.
- After that proceed with the requested test program for water absorption.

In one embodiment, the mineral wool product has a density of 20 to 150 kg/m³, such as 40 to 130 kg/m³, such as 60-120 kg/m³.

### A Method for Producing a Mineral Wool Product

The present invention is also directed to a method for producing a mineral wool product which comprises the steps of contacting mineral fibers with a binder composition comprising a phenol-formaldehyde-based resin, and/or a carbohydrate-containing component, and a hydrophobic agent comprising (i) at least one silicone compound, which is a reactive silicone resin chosen from the group of polyalkylethoxysiloxane, polymethylethoxysiloxane, polyphenylethoxysiloxane, polyphenylsiloxane, polyphenylmethylsiloxane, (ii) at least one hardener, which is alkyltriethoxysilane, such as octyltriethoxysilane, (iii) at least one emulsifier, wherein the mineral wool product is in form of an insulation product for thermal insulation of metallic structures.

In one embodiment, the hydrophobic agent comprises (i) in an amount of 20 to 90 percent by weight, in particular 30 to 60 percent by weight, based on the weight of the hydrophobic agent.

In one embodiment, the hydrophobic agent comprises (i) in form of polymethylethoxysiloxane.

In one embodiment, the hydrophobic agent comprises (ii) in an amount of 0.5 to 10 percent by weight, in particular 1 to 5 percent by weight, based on the total weight of the hydrophobic agent.

In one embodiment, the hydrophobic agent comprises (ii) in form of octyltriethoxysilane.

In one embodiment, the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

In one embodiment, the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

In one embodiment, the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

In one embodiment, the binder composition comprises a carbohydrate-containing binder component, wherein the binder composition further comprises (a) a polycarboxylic acid component or any salt thereof and/or an inorganic acid or any salt thereof, and/or (b) a component selected from the group consisting of amine compounds, ammonia, and optionally, and/or (c) a reaction product of a polycarboxylic acid component or anhydride thereof and an alkanolamine component.

The method is a method for producing a mineral wool product in form of an insulation product for thermal insulation of metallic surfaces structures.

In one embodiment the method is a method for producing a mineral wool product in form of a pipe section or a mat or wired mat.

The present invention is further illustrated by the following examples:

### Examples

Different insulation products were tested with regard to water absorption properties according to the standard ASTM C1763-16 test method.

The results of tests are stated in Table 1.

| Sample | Density kg/m³ | Volume cm³ | Mass, initial 9 | Mass, after immersion (2 hr) 9 | Mass, recondition (after 48 hr) 9 | Water Abs. (WA) vol.% | Recovery WA, 2 hr vol.% | Recovery WA, 48 hr vol.% |
|---|---|---|---|---|---|---|---|---|
| Roxul SL960, mat | 92 | 4532 | 415.69 | 658.47 | 415.82 | 5.4 | 4.9 | 0.003 |
| E-glass, pipe section | 234 | 2755 | 646.09 | 3166.03 | 2599.29 | 22.9 | 22.6 | 17.73 |
| Roxul, pipe section with Silicone resin BS45 | 73 | 2162 | 158.14 | 183.88 | 158.93 | 1.2 | 0.5 | 0.037 |
| Mineral wool, pipe section | 145 | 2427 | 350.88 | 832.86 | 438.04 | 5.0 | 4.8 | 0.898 |
| Roxul PS980, pipe section | 183 | 1776 | 325.90 | 806.37 | 556.76 | 6.8 | 6.6 | 3.249 |
| Mineral wool, mat | 80 | 7582 | 606.86 | 2040.20 | 1269.98 | 18.9 | 18.2 | 8.746 |

Pipe sections were tested with regard to water absorption properties according to the standard EN13472. The pipe sections were manufactured as a mandrel wound pipe section and are from the ProRox product series and the tested specimen had a thickness of 50 mm.

The tests were done on both untreated products and products that were aged (250°C/24h).

SILRES BS 45 silicon resin from Wacker had been added to the products in amount of 0.41 wt.%.

The results from a triple-determination are stated in Table 2.

**Table 2.**

| Sample | Water Absorption level according to the EN13472 standard, Initial | Water Absorption level according to the EN13472 standard, Aged (24h, 250°C) |
|---|---|---|
| | kg/m² | kg/m² |
| ProRox 960 | 0.09 | 0.08 |

## Claims

1. Use of a mineral wool product comprising mineral fibers bound by a binder resulting from the curing of a binder composition comprising
a hydrophobic agent comprising:
at least one silicone compound, which is a reactive silicone resin chosen from the group of polyalkylethoxysiloxane, polymethylethoxysiloxane, polyphenylethoxysiloxane, polyphenylsiloxane, polyphenylmethylsiloxane;
to inhibit corrosion when insulating metallic structures,
wherein the mineral wool product is used as insulation of a metallic structure, said structure having an operating temperature between 70-650 °C.

2. Use according to claim 1, wherein the binder composition comprises a phenol-formaldehyde-based resin, and/or a carbohydrate containing component.

3. Use according to claim 1 or 2, wherein the hydrophobic agent comprises at least one hardener, such as silane, such as alkyltriethoxysilane, such as alkyltriethoxysilane, such as octyltriethoxysilane.

4. Use according to any one of the claims 1 to 3, wherein the hydrophobic agent comprises at least one emulsifier.

5. Use according to any one of the preceding claims, wherein the mineral wool product is used as insulation of a metallic structure, said structure having an operating temperature between 70-500 °C, such as between 70-300 °C, such as between 300-650 °C.

6. Use according to any one of the preceding claims, wherein the hydrophobic agent comprises (ii) at least one hardener in an amount of 0.5 to 10 percent by weight, in particular 1 to 5 percent by weight, based on the total weight of the hydrophobic agent.

7. Use according to any one of the preceding claims, wherein the hydrophobic agent comprises (i) the at least one silicone compound in an amount of 30 to 60 percent by weight, (ii) at least one hardener in an amount of 1 to 5 percent by weight, based on the total weight of the hydrophobic agent, the remainder being (iii) at least one emulsifier and optionally other components and trace amounts of ethanol.

8. Use according to any one of the preceding claims, wherein the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

9. Use according to any one of the preceding claims, wherein the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

10. Use according to any one of the preceding claims, wherein the binder composition comprises a carbohydrate-containing binder component, wherein the binder composition further comprises:
(a) a polycarboxylic acid component or any salt thereof and/or an inorganic acid or any salt thereof, and/or
(b) a component selected from the group consisting of amine compounds, ammonia; and optionally, and/or
(c) a reaction product of a polycarboxylic acid component or anhydride thereof and an alkanolamine component.

11. Use according to any one of the preceding claims, wherein the mineral wool product is a pipe section or a mat or wired mat.

12. A method for producing a mineral wool product which comprises the steps of contacting mineral fibers with a binder composition and curing of the binder composition, the binder composition comprising
a phenol-formaldehyde-based resin, and/or a carbohydrate-containing component; and
a hydrophobic agent comprising:
(i) at least one silicone compound, which is a reactive silicone resin chosen from the group of polyalkylethoxysiloxane, polymethylethoxysiloxane, polyphenylethoxysiloxane, polyphenylsiloxane, polyphenylmethylsiloxane; and
(ii) at least one hardener, which is alkyltriethoxysilane, such as octyltriethoxysilane; and
(iii) at least one emulsifier,
wherein the mineral wool product is in form of an insulation product for thermal insulation of metallic structures.

## Patentansprüche

1. Verwendung eines Mineralwolleprodukts, umfassend Mineralfasern, die durch ein Bindemittel gebunden sind, das aus der Härtung einer Bindemittelzusammensetzung resultiert, die umfasst
ein hydrophobes Mittel, umfassend:
mindestens eine Silikonverbindung, die ein reaktives Silikonharz ist, das ausgewählt ist aus der Gruppe von Polyalkylethoxysiloxan, Polymethylethoxysiloxan, Polyphenylethoxysiloxan, Polyphenylsiloxan, Polyphenylmethylsiloxan;
zur Hemmung von Korrosion bei der Isolierung metallischer Strukturen, wobei das Mineralwolleprodukt als Isolierung einer metallischen Struktur verwendet wird, wobei die Struktur eine Betriebstemperatur zwischen 70 - 650 °C aufweist.

2. Verwendung nach Anspruch **1,** wobei die Bindemittelzusammensetzung ein Harz auf Phenol-Formaldehyd-Basis und/oder eine kohlenhydrathaltige Komponente umfasst.

3. Verwendung nach Anspruch 1 oder 2, wobei das hydrophobe Mittel mindestens einen Härter umfasst, wie z. B. Silan, wie z. B. Alkyltriethoxysilan, wie z. B. Octyltriethoxysilan.

4. Verwendung nach einem der Ansprüche 1 bis 3, wobei das hydrophobe Mittel mindestens einen Emulgator umfasst.

5. Verwendung nach einem der vorhergehenden Ansprüche, wobei das Mineralwolleprodukt als Isolierung einer metallischen Struktur verwendet wird, wobei die Struktur eine Betriebstemperatur zwischen 70 - 500 °C, wie z. B. zwischen 70 - 300 °C, wie z. B. zwischen 300 - 650 °C, aufweist.

6. Verwendung nach einem der vorhergehenden Ansprüche, wobei das hydrophobe Mittel (ii) mindestens einen Härter in einer Menge von 0,5 bis 10 Gewichtsprozent, insbesondere 1 bis 5 Gewichtsprozent, bezogen auf das Gesamtgewicht des hydrophoben Mittels, umfasst.

7. Verwendung nach einem der vorhergehenden Ansprüche, wobei das hydrophobe Mittel (i) die mindestens eine Silikonverbindung in einer Menge von 30 bis 60 Gewichtsprozent, (ii) mindestens einen Härter in einer Menge von 1 bis 5 Gewichtsprozent, bezogen auf das Gesamtgewicht des hydrophoben Mittels, umfasst, wobei der Rest (iii) mindestens ein Emulgator und gegebenenfalls weitere Komponenten und Spurenmengen von Ethanol sind.

8. Verwendung nach einem der vorhergehenden Ansprüche, wobei das hydrophobe Mittel Polymethylethoxysiloxan in einer Menge von 30 bis 60 Gewichtsprozent, Octyltriethoxysilan in einer Menge von 1 bis 5 Gewichtsprozent, bezogen auf das Gesamtgewicht des hydrophoben Mittels, umfasst, wobei der Rest (iii) und gegebenenfalls weitere Komponenten und Spurenmengen von Ethanol sind.

9. Verwendung nach einem der vorhergehenden Ansprüche, wobei das Mineralwolleprodukt das hydrophobe Mittel in einer Menge von 0,05 bis 2 Gewichtsprozent, wie z. B. 0,10 bis 1 Gewichtsprozent, wie z. B. 0,15 bis 0,8 Gewichtsprozent, bezogen auf das Gewicht des Mineralwolleprodukts, umfasst.

10. Verwendung nach einem der vorhergehenden Ansprüche, wobei die Bindemittelzusammensetzung eine kohlenhydrathaltige Bindemittelkomponente umfasst, wobei die Bindemittelzusammensetzung ferner umfasst:
(a) eine Polycarbonsäurekomponente oder ein Salz davon und/oder eine anorganische Säure oder ein Salz davon und/oder
(b) eine Komponente ausgewählt aus der Gruppe bestehend aus Aminverbindungen, Ammoniak; und gegebenenfalls, und/oder
(c) ein Reaktionsprodukt einer Polycarbonsäurekomponente oder eines Anhydrids davon und einer Alkanolamin-Komponente.

11. Verwendung nach einem der vorhergehenden Ansprüche, wobei das Mineralwolleprodukt ein Rohrabschnitt oder eine Matte oder Drahtmatte ist.

12. Verfahren zur Herstellung eines Mineralwolleprodukts, umfassend die Schritte des Inkontaktbringens von Mineralfasern mit einer Bindemittelzusammensetzung und des Härtens der Bindemittelzusammensetzung, wobei die Bindemittelzusammensetzung umfasst
ein Harz auf Phenol-Formaldehyd-Basis und/oder eine kohlenhydrathaltige Komponente; und
ein hydrophobes Mittel, umfassend:
(i) mindestens eine Silikonverbindung, die ein reaktives Silikonharz ist, das ausgewählt ist aus der Gruppe von Polyalkylethoxysiloxan, Polymethylethoxysiloxan, Polyphenylethoxysiloxan, Polyphenylsiloxan, Polyphenylmethylsiloxan; und
(ii) mindestens einen Härter, der Alkyltriethoxysilan ist, wie z. B. Octyltriethoxysilan; und
(iii) mindestens einen Emulgator,
wobei das Mineralwolleprodukt in Form eines Isolierprodukts zur thermischen Isolierung von metallischen Strukturen vorliegt.

## Revendications

1. Utilisation d'un produit de laine minérale comportant des fibres minérales liées par un liant résultant du durcissement d'une composition de liant comportant
un agent hydrophobe comportant :
au moins un composé de silicone, qui est une résine de silicone réactive choisie dans le groupe constitué par du polyalkyléthoxysiloxane, polyméthyléthoxysiloxane, polyphényléthoxysiloxane, polyphénylsiloxane, polyphénylméthylsiloxane ;
pour inhiber une corrosion lors de l'isolation de structures métalliques, dans laquelle le produit de laine minérale est utilisé comme isolation d'une structure métallique, ladite structure présentant une température de fonctionnement comprise entre 70 et 650 °C.

2. Utilisation selon la revendication 1, dans laquelle la composition de liant comporte une résine à base de phénol-formaldéhyde, et/ou un composant contenant des hydrates de carbone.

3. Utilisation selon la revendication 1 ou 2, dans laquelle l'agent hydrophobe comporte au moins un durcisseur, tel que du silane, tel que de l'alkyltriéthoxysilane, tel que de l'alkyltriéthoxysilane, tel que de l'octyltriéthoxysilane.

4. Utilisation selon l'une quelconque des revendications 1 à 3, dans laquelle l'agent hydrophobe comporte au moins un émulsifiant.

5. Utilisation selon l'une quelconque des revendications précédentes, dans laquelle le produit de laine minérale est utilisé comme isolation d'une structure métallique, ladite structure présentant une température de fonctionnement comprise entre 70 et 500 °C, telle que entre 70 et 300 °C, telle que entre 300 et 650 °C.

6. Utilisation selon l'une quelconque des revendications précédentes, dans laquelle l'agent hydrophobe comporte (ii) au moins un durcisseur en une quantité de 0,5 à 10 % en poids, en particulier de 1 à 5 % en poids, par rapport au poids total de l'agent hydrophobe.

7. Utilisation selon l'une quelconque des revendications précédentes, dans laquelle l'agent hydrophobe comporte (i) l'au moins un composé de silicone en une quantité de 30 à 60 % en poids, (ii) au moins un durcisseur en une quantité de 1 à 5 pour cent en poids, par rapport au poids total de l'agent hydrophobe, le reste étant (iii) au moins un émulsifiant et facultativement d'autres composants et des traces d'éthanol.

8. Utilisation selon l'une quelconque des revendications précédentes, dans laquelle l'agent hydrophobe comporte du polyméthyléthoxysiloxane en une quantité de 30 à 60 pour cent en poids, de l'octyltriéthoxysilane en une quantité de 1 à 5 pour cent en poids, par rapport au poids total de l'agent hydrophobe, le reste étant (iii) et éventuellement d'autres composants et des traces d'éthanol.

9. Utilisation selon l'une quelconque des revendications précédentes, dans laquelle le produit de laine minérale comporte l'agent hydrophobe en une quantité de 0,05 à 2 % en poids, telle que 0,10 à 1 % en poids, telle que 0,15 à 0,8 % en poids, par rapport au poids du produit de laine minérale.

10. Utilisation selon l'une quelconque des revendications précédentes, dans laquelle la composition de liant comporte un composant de liant contenant des hydrates de carbone, dans laquelle la composition de liant comporte en outre :
(a) un composant d'acide polycarboxylique ou un quelconque sel de celui-ci et/ou un acide inorganique ou un quelconque sel de celui-ci, et/ou
(b) un composant choisi dans le groupe constitué par des composés amine, de l'ammoniac ; et facultativement, et/ou
(c) un produit de réaction d'un composant acide polycarboxylique ou d'un anhydride de celui-ci et d'un composant alcanolamine.

11. Utilisation selon l'une quelconque des revendications précédentes, dans laquelle le produit de laine minérale est une section de tuyau ou une nappe ou une nappe grillagée.

12. Procédé de production d'un produit de laine minérale qui comporte les étapes de mise en contact de fibres minérales avec une composition de liant et de durcissement de la composition de liant, la composition de liant comportant
une résine à base de phénol-formaldéhyde, et/ou un composant contenant des hydrates de carbone ; et
un agent hydrophobe comportant :
(i) au moins un composé de silicone, qui est une résine de silicone réactive choisie dans le groupe constitué par du polyalkyléthoxysiloxane, polyméthyléthoxysiloxane, polyphényléthoxysiloxane, polyphénylsiloxane, polyphénylméthylsiloxane ; et
(ii) au moins un durcisseur, qui est de l'alkyltriéthoxysilane, tel que de l'octyltriéthoxysilane ; et
(iii) au moins un émulsifiant,
dans lequel le produit de laine minérale se présente sous la forme d'un produit d'isolation pour l'isolation thermique de structures métalliques.
